Europäisches Patentamt

European Patent Office

Office européen des brevets

(19)

(11) Numéro de publication : **0 400 734 B1**

(12)

# FASCICULE DE BREVET EUROPEEN

(45) Date de publication du fascicule du brevet :
**09.08.95 Bulletin 95/32**

(51) Int. Cl.⁶ : **G06F 5/06**

(21) Numéro de dépôt : **90201320.0**

(22) Date de dépôt : **25.05.90**

(54) **Dispositif de retard d'un signal numérique programmable et application à un dispositif de code correcteur d'erreurs.**

(30) Priorité : **30.05.89 FR 8907099**

(43) Date de publication de la demande :
**05.12.90 Bulletin 90/49**

(45) Mention de la délivrance du brevet :
**09.08.95 Bulletin 95/32**

(84) Etats contractants désignés :
**DE FR GB IT**

(56) Documents cités :
**EP-A- 0 193 765**
**US-A- 3 829 843**
**EDN, 5 janvier 1974, pages 64-67, Boston, US;**
**D.C. WYLAND: "Shift registers can be desi-**
**gned using RAMs and counter chips"**
**PATENT ABSTRACTS OF JAPAN, vol. 11, no.**
**212 (E-522)[2659], 9 juillet 1987, page 102 E**
**522; & JP-A-62 34 438 (NIPPON TELEGR. &**
**TELEPH. CORP. (NTT)) 14-02-1987**

(72) Inventeur : **Butel, Pascal**
**Societé Civile S.P.I.D.,**
**209 rue de l'Université**
**F-75007 Paris (FR)**
Inventeur : **Dahiot, Alain**
**Societé Civile S.P.I.D.,**
**209 rue de l'Université**
**F-75007 Paris (FR)**
Inventeur : **Ferrier, Joel**
**Societé Civile S.P.I.D.,**
**209 rue de l'Université**
**F-75007 Paris (FR)**

(74) Mandataire : **Pyronnet, Jacques et al**
**Société Civile S.P.I.D.**
**156, Boulevard Haussmann**
**F-75008 Paris (FR)**

(73) Titulaire : **TRT TELECOMMUNICATIONS**
**RADIOELECTRIQUES ET TELEPHONIQUES**
**88 rue Brillat Savarin**
**F-75013 Paris (FR)**
(84) **FR**
Titulaire : **Philips Electronics N.V.**
**Groenewoudseweg 1**
**NL-5621 BA Eindhoven (NL)**
(84) **DE GB IT**

## Description

L'invention concerne un dispositif de retard pour retarder un signal numérique d'entrée série SIN d'un nombre entier M de temps de bit H, soit d'une durée : $\tau$ + M.H, et le transformer en un signal numérique de sortie série retardé SOUT ayant même débit binaire que SIN, le nombre M étant programmable par pas, dispositif comportant une mémoire à accès aléatoire (RAM).

Le dispositif selon l'invention permet d'obtenir des retards de quelques mégabits avec des fréquences d'horloge (débits binaires) pouvant dépasser 100 MHz. De telles performances permettent d'appliquer aisément ce dispositif notamment à des dispositifs de codes correcteurs d'erreurs connus, utilisés dans le domaine des télécommunications, par exemple pour la création de retards supérieurs à 500 temps de bit avec un débit binaire de l'ordre de 40 MHz. Plus généralement, ce dispositif trouve une application chaque fois qu'il est besoin de retarder un signal numérique, sans effectuer de changement de rythme comme c'est le cas dans les dispositifs du type premier entré-premier sorti (FIFO). Comme autre type d'utilisation dans le domaine des télécommunications, on peut encore citer le filtrage en bande de base et, dans le domaine de la vidéo, le filtrage bidimensionnel et d'autres applications qui se font jour avec l'apparition de la télévision numérique.

En se plaçant à un niveau d'arrière plan technologique qui englobe largement le domaine technique concerné on cite par exemple le problème technique qui consiste à extraire les contours horizontaux d'une image vidéo en calculant le gradient de deux points situés sur une même verticale. Cette opération nécessite le retardement d'une ligne vidéo afin de la comparer à la ligne suivante et par exemple 4 dispositifs de retard ayant chacun une capacité de plusieurs centaines d'éléments d'image (pixels) sont nécessaires.

Les solutions actuellement connues et utilisées pour résoudre cette catégorie de problèmes sont les suivantes :

- l'utilisation de lignes à retard analogiques qui peuvent aussi traiter des signaux numériques.

  Ces lignes sont réalisées par l'association d'éléments actifs tels que des amplificateurs, et d'éléments passifs tels que selfs et capacités. Elles présentent les inconvénients d'être asynchrones, peu stables dans le temps à cause de la dérive des composants passifs, d'avoir une faible gamme de programmation et d'être chères.
- l'utilisation de lignes à retard C.C.D. (Charge Coupled Devices en langue anglaise).

  Ces lignes sont constituées par une série de cellules aptes à mémoriser une charge électrique, les cellules étant reliées entre elles par des transistors MOS permettant, lorsqu'ils sont conducteurs, le passage des charges d'une cellule à la suivante. On distingue, dans un système CCD un convertisseur tension-courant, la barrette CCD et ses signaux de commande, un convertisseur courant-tension et un échantillonneur de sortie. Les inconvénients des lignes CCD sont leur lenteur (fréquence d'horloge inférieure à 20 MHz), leur mise en oeuvre difficile (plusieurs tensions d'alimentation sont nécessaires), l'impossibilité d'obtenir un retard programmable et leur coût élevé.
- l'utilisation de registres programmables à bascules (bascules D).

  Ces registres, dont les caractéristiques de fonctionnement sont proches de celles visées par l'invention, le fonctionnement entièrement numérique notamment, sont largement utilisés et simples à mettre en oeuvre. Les fréquences de décalage peuvent atteindre des valeurs très élevées (supérieures à 100 MHz) et ces registres sont facilement programmables.

  Un inconvénient majeur demeuré cependant, qui est celui de l'obtention de grands retards étant donné que chaque temps de bit de retard nécessite l'utilisation d'une bascule avec son entrée d'horloge particulière et que l'utilisation de nombreux commutateurs pour la création de grands retards pose des problèmes de temps de propagation trop grands. Pour des retards importants, supérieurs à 500 temps de bit, le nombre de bascules nécessaires devient prohibitif et le prix très élevé. On connaît par exemple le registre à décalage programmable 1 à 64 bits HEF 4557 B produit par la société Philips, qui peut fonctionner à une fréquence d'horloge de 20 MHz. En typique sous 15 Volts, on connaît aussi le registre à décalage AMD 2804, produit par la société américaine AMD et pouvant fournir des retards compris entre 1 et 256 bits à des fréquences d'horloge de 4 MHz.

On connaît aussi du document EDN du 5 janvier 1974, pages 64-67, D.C. WYLAND : "Shift Registers Can Be Designed Using RAMs and Counter Chips", un dispositif de retard qui utilise une mémoire RAM organisée par mots de 1 bit.

Selon l'invention, les inconvénients de l'art antérieur sont atténués ou supprimés grâce au fait que le dispositif de retard tel que revendiqué en revendication 1 et indiqué au premier paragraphe est remarquable en ce qu'il comporte un registre d'entrée à au moins un bit et du type entrée série/sorties parallèles connecté à, ladite mémoire à accès aléatoire (RAM) dont chacun des r emplacements de bit(s) contient un nombre entier p de bit(s) au moins égal à 1, un registre de sortie à au moins un bit et de type entrées parallèles/sortie série connecté à ladite mémoire RAM, et des moyens de commande de la mémoire RAM constitués par un décodeur qui reçoit sous forme numérique sur un bus d'entrée le nombre M, un compteur cyclique qui reçoit du bus de sortie du décodeur un nombre de programmation N par lequel il adresse cycliquement la mémoire RAM et un séquenceur qui reçoit du compteur cyclique un signal de commande de cycle d'écriture-lecture et qui fournit à la mémoire RAM les signaux de commande d'écriture et de lecture, et en ce que ledit décodeur est un soustracteur qui effectue l'opération M - q = N, q incorporant le retard interne exprimé en un nombre entier de périodes H intrinsèquement apporté par lesdits registres d'entrée et de sortie et la mémoire RAM lors de leur fonctionnement.

L'idée de base de l'invention est d'utiliser une mémoire RAM comme registre et de faire fonctionner globalement ce registre comme un registre à décalage ordinaire, à la différence près que, pour l'établissement d'un temps de retard prédéterminé, l'information sous forme numérique reste stockée en un emplacement fixe de la mémoire RAM au lieu de transiter dans les différents emplacements de bit comme c'est le cas pour un registre à décalage. Pour obtenir un tel fonctionnement, un adressage cyclique de la RAM est nécessaire, ainsi qu'une synchronisation des instants d'écriture et de lecture par rapport à l'horloge bit, et un décodage du nombre de bits de retard requis afin de prendre en compte un certain nombre de bits de retard intrinsèquement apportés, en fonctionnement, par la mémoire RAM et des registres annexes d'entrée et de sortie. On notera que la mémoire RAM peut avoir une grande capacité de stockage d'information numérique, directement liée aux retards souhaités, qu'elle fonctionne à vitesse élevée, en liaison directe avec le nombre de bits par emplacement mémoire, tout en nécessitant une seule entrée d'horloge et que son prix est très bas en comparaison de celui de plusieurs centaines, voire milliers de bascules D comportant chacune une entrée d'horloge. A noter aussi qu'une bascule, sur une plaquette de circuit intégré, consomme pour 1 bit deux fois plus de place (de surface de Silicium) qu'une cellule de mémoire RAM de 8 bits.

Un mode de réalisation préféré du dispositif selon l'invention est caractérisé en ce que la mémoire RAM est organisée en mots de p bits, p étant égal à 2 ou à un multiple de 2, que ledit registre d'entrée comporte une entrée série et p sorties parallèles, ledit registre de sortie comporte p entrées parallèles et une sortie série, et qu'il comporte en outre, juste en amont dudit registre d'entrée, un registre à décalage programmable qui reçoit du bus de sortie du décodeur les bits les moins significatifs du nombre de programmation N fournissant un nombre de bits de décalage 1 tel que : np+1-1 = N et que ledit décodeur est conçu pour fournir une partie principale n du nombre de programmation N audit compteur cyclique.

Le principal avantage de cette réalisation est que le multiplexage des bits avant écriture dans la mémoire permet d'atteindre des fréquences d'horloge typiquement supérieures à 100 MHz, à un prix très bas comparativement à la solution à bascules ; à titre d'illustration, on peut citer le cas des circuits prédiffusés où une cellule RAM représente 3 portes équivalentes, au lieu de 6 pour une bascule D.

La description qui suit en regard des dessins annexés, le tout donné à titre d'exemple, fera bien comprendre comment l'invention peut être réalisée.

La figure 1 est le schéma synoptique d'un premier mode de réalisation de l'invention.

La figure 2 est un diagramme de temps permettant d'expliciter le fonctionnement du dispositif de la figure 1.

La figure 3 est le schéma synoptique d'un deuxième mode de réalisation de l'invention.

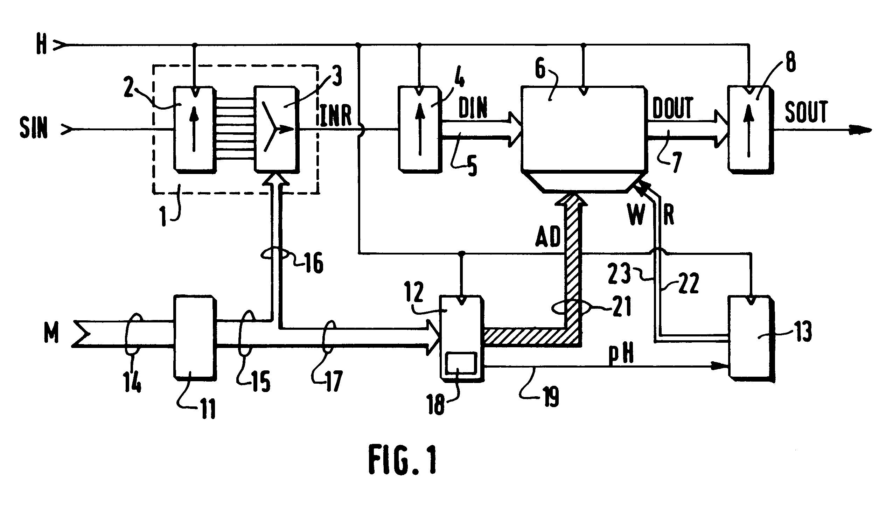

Le dispositif de retard représenté à la figure 1 est constitué par une chaîne principale de traitement d'un signal de données numériques entrantes SIN, à la partie supérieure de la figure, et d'une chaîne secondaire de commande de la chaîne principale à la partie inférieure de la figure. Le signal SIN est fourni à un registre à décalage programmable par pas de 1 bit, référencé 1. Le registre 1 est constitué par exemple par l'agencement série d'un registre à décalage 2 à p bits, à entrée série et p sorties parallèles et d'un multiplexeur 3 à p entrées parallèles, 1 parmi p, et sortie série. Le registre 1 fournit un signal numérique série INR à un registre d'entrée 4, identique au registre à décalage 2 qui fournit sur un bus de données à p conducteurs 5 un signal DIN à une mémoire à accès aléatoire (RAM) 6 qui comporte r emplacements de p bits. Un bus de sortie 7 à p conducteurs, porteur du signal DOUT, est relié à un registre de sortie 8 à p entrées parallèles et sortie série dont la sortie, qui est aussi celle du dispositif de retard, est le siège du signal SOUT. Le signal SOUT est la réplique du signal SIN retardé d'un nombre entier M temps de bit dont la valeur minimale est de l'ordre de quelques temps de bit (typiquement inférieure à 20 bits) et dont la valeur maximale peut atteindre plusieurs mégabits. Un signal d'horloge H, de période H, est fourni aux registres 2, 4 et 8 et à la mémoire 6. La fréquence 1/H du signal d'horloge peut dépasser 100 MHz. Les éléments 2, 3, 4, 6 et 8 peuvent être réalisés au moyen des circuits intégrés suivants, pour la création de retards allant jusqu'à quelques centaines de bits avec un débit binaire 1/H de 40 MHz, en liaison avec leurs circuits de commande décrits plus loin.

| registres 2 et 4 | : 74F164 |
| multiplexeur 3 | : 74F151 |
| mémoire 6 | : RAM statique HM65161 de la société française Matra Harris, |
| registre 8 | : 2 fois 74F194 |

La valeur de p, de préférence supérieure à 1 et égale à 2 ou à un multiple de 2, est choisie égale à 8 dans le présent exemple. Le débit binaire 1/H maximum possible est fonction directe de p et donc d'autant plus élevé que la valeur de p est grande. Le registre à décalage 1 est optionnel ; en son absence, le dispositif de retard permet la réalisation de retards par pas de p bits. Cependant, pour la plupart des applications et même pour de grands retards il est souhaitable d'obtenir des retards variant par pas de 1 bit, ce que permet le registre programmable 1.

La chaîne secondaire de commande, au bas de la figure 1, est constituée par un décodeur 11, un compteur cyclique 12 et un séquenceur 13, par exemple réalisés au moyen des circuits intégrés suivants :

Décodeur 11 : plusieurs additionneurs HE4008B montés en cascade,
Compteur 12 : plusieurs circuits 74F163
Séquenceur 13 : 74F374.

Le signal d'horloge H est fourni aux éléments 12 et 13. Le décodeur 11 reçoit sous forme numérique parallèle d'un bus 14 le nombre de temps de bit de retard M imposé par l'utilisateur. A ce nombre est soustrait dans le décodeur 11 un nombre entier fixe q égal à quelques unités. La soustraction M-q s'effectue par exemple par adjonction du complément à 2 de q. Du décodage effectué en 11, il résulte la fourniture d'un nombre N sous forme numérique parallèle sur un bus 15 en sortie du décodeur 11. Les bits de poids les plus faibles sont transmis par un bus 16 au multiplexeur 3 pour sélectionner l'une parmi ses p entrées et les bits restants (poids forts) par un bus 17 au compteur cyclique 12. Le bus 16 est porteur du nombre l-1 tel que : $1 \leq l \leq p$ et le bus 17 porteur du nombre n dont la plus petite valeur est 1. Dans le compteur 12, un changement d'horloge est effectué, en 18, pour que ce compteur s'incrémente d'une unité tous les p coups d'horloge, soit une horloge de comptage de période pH qui est aussi transmise par un conducteur 19 au séquenceur 13. Le compteur 12 effectue un comptage cyclique ...0, 1, ..., n-1, 0, 1... et ces n états de comptage sont fournis en binaire en tant qu'adresses de lecture et d'écriture, sur un bus d'adresses 21 qui permet l'établissement de n cycles de lecture puis d'écriture, chacun de durée pH, dans n emplacements mémoire parmi les r emplacements de la mémoire 6. La séquence de lecture puis d'écriture à l'intérieur de chaque cycle est établie par le séquenceur 13 qui reçoit à cet effet les signaux d'horloge H et pH et qui est commandé pour fournir à la mémoire 6 un signal de lecture R sur un conducteur 22 puis un signal d'écriture W sur un conducteur 23.

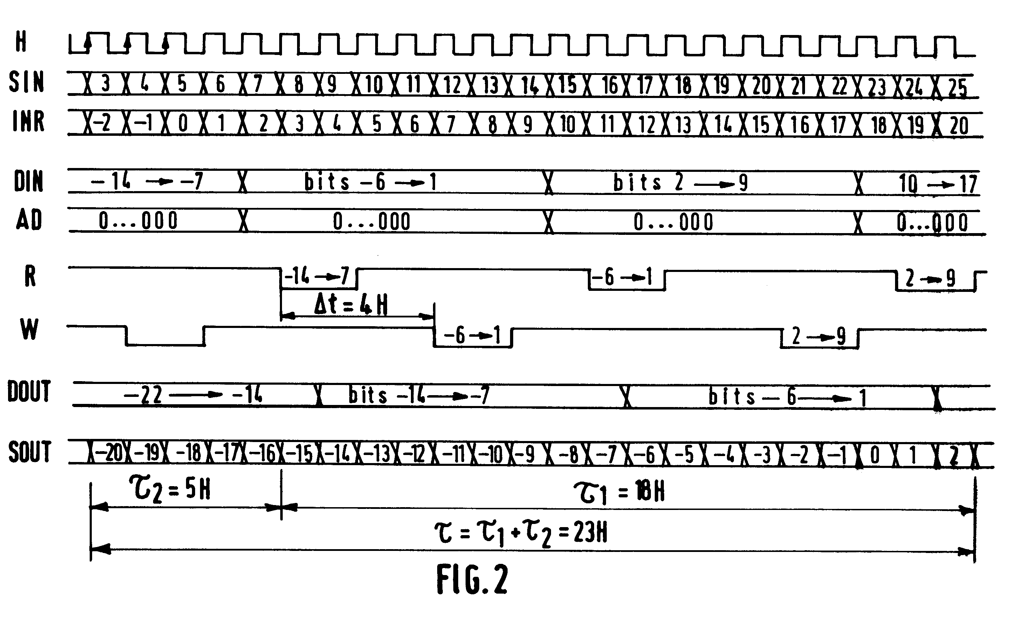

Le fonctionnement du dispositif de retard est illustré par le diagramme de temps de la figure 2 dans le cas particulier où un seul emplacement mémoire de 8 bits est utilisé, dans la mémoire 6, ce qui correspond à la valeur n = 1, à l'état 0...001 pour le bus 17 et à l'état 0...000 pour le bus d'adresses 21. A la figure 2, on a représenté les signaux H, SIN, INR, DIN, AD qui est l'état d'adressage du bus 21, R, W, DOUT et SOUT.

Le nombre M affiché sur le bus d'entrée 14 du décodeur est par exemple égal à 23, ce qui entraine un retard entre les signaux SIN et SOUT égal à : $\tau = 23$ H. Le décodeur 11 ajoute au nombre M la représentation binaire en complément à 2 du nombre : q = 11. Le bus 16 à 3 conducteurs est porteur du nombre binaire : l-1 = 100, soit 4, ce qui entraine un retard du signal SIN, à travers le registre à décalage 1, égal à : $\tau_2 = 5$ H, correspondant à la valeur : l = 5. Le bus 17, par exemple à 6 conducteurs est porteur du nombre binaire : n = 00000001, ce qui se traduit sur le bus de sortie 21 du compteur cyclique 12 par la configuration binaire permanente : 000000 qui adresse le premier emplacement de la mémoire 6. Le nombre de programmation N, sur le bus 15 est donc égal à : 000001100 et sa partie principale n vaut 1. On notera que, pour des valeurs de n supérieures à 1, le compteur 12 fournit cycliquement à la cadence 1/8 H les n premières adresses de la mémoire 6 comprises entre 0 et n-1. Les phases de lecture puis d'écriture, disjointes, au cours de chaque cycle de durée 8 H sont choisies de façon telle qu'un intervalle de temps $\Delta t$ égal à un nombre entier k de périodes H sépare les instants marquant le début de chaque phase. Dans l'exemple de la figure 2, on a choisi : $\Delta t = kH = 4$ H. Un emplacement de la mémoire 6 qui est inscrit à un instant $t_1$ est donc lu, n cycles plus tard, à l'intant $t_1 + npH - kH$ soit, dans le cas de la figure 2, avec un retard de 4 H. Par ailleurs, l'ensemble des éléments 4, 6 et 8 apporte un retard : $\tau_3 = mH$ intrinsèque, conditionné par la technologie et le type de mémoire utilisé, ce retard, de l'ordre de quelques périodes d'horloge étant lui aussi rendu égal à un nombre entier m de périodes H au moyen des synchronisations décrites plus haut. A la figure 2, le retard $\tau_3$ est égal à : $\tau_3 = mH = 14$ H en prenant en compte le retard pH dû à la mise en parallèle du signal INR par le registre à décalage 4. Le calcul du nombre q peut se déduire des deux relations suivantes :

$$M - q = np + (l - 1) = N$$
$$M = (np - k) + m + l$$

ce qui entraîne :

$$q = m - k + 1$$

On notera que le dispositif de la figure 1 peut aussi être ajusté par étalonnage et réglage, c'est-à-dire que le nombre q à soustraire dans le décodeur 11 peut être obtenu sans calcul préalable en appliquant sur le bus 15 la configuration binaire 0...01000 et en mesurant le retard, égal à qH, entre les signaux SIN et SOUT.

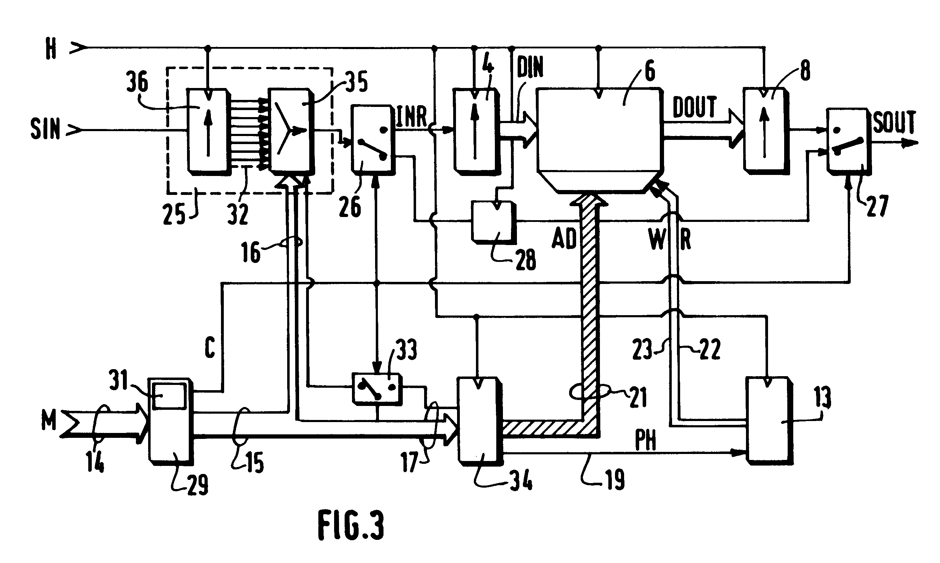

Le dispositif de retard de la figure 1 permet d'établir des retards programmables par pas de H égaux ou supérieurs à : (p+q)H, soit 19 H dans l'exemple de la figure 2. Pour certaines applications, il peut être nécessaire d'avoir un dispositif de retard quasi universel, c'est-à-dire ayant les performances du dispositif de la figure 1 et permettant de réaliser aussi les petits retards compris entre 2 H et (p+q-1)H. Dans ce cas, une adaptation du schéma électronique de la figure 1 est nécessaire, comme représenté à la figure 3 où l'on distingue les éléments supplémentaires suivants :

entre le registre à décalage programmable 25 et le registre d'entrée 4, ainsi qu'à la sortie du dispositif de retard, deux commutateurs à deux positions respectifs 26 et 27 permettent de dériver l'information numérique série qui ne transite plus dès lors à travers les éléments 4, 6 et 8 mais à travers un registre de synchronisation à 1 bit 28 qui reçoit le signal d'horloge H. Les commutateurs 26 et 27 sont commandés par un signal C à 2 états, 0 ou 1, en provenance du décodeur 29 qui effectue la dérivation précitée représentée sur la figure 3 lorsqu'il est détecté, dans le décodeur 29, que le nombre M est inférieur à p+q (C = 0 par exemple). Le signal C est engendré dans le décodeur 29 au moyen de circuits logiques symbolisés en 31 et dont l'agencement est à la portée de l'homme du métier. On notera que le signal C doit aussi modifier légèrement le décodage, à l'intérieur du décodeur pour prendre en compte le retard d'une période d'horloge apporté par le registre 28 ; par exemple, pour la configuration binaire d'entrée : M = 0...0010 sur le bus d'entrée 14, la configuration sur le bus de sortie 15 doit être : N = 0...0000. Par ailleurs, le registre à décalage programmable 25 a une longueur au moins égale à p+q-1 et ce registre reçoit, en conséquence un ou plusieurs conducteurs supplémentaires pour sa programmation ; ces modifications sont représentées à la figure 3 par la liaison en trait interrompu 32, interne au registre 25 et par le commutateur à deux positions 33 commandé par le signal C et qui permet la dérivation, d'un ou plusieurs conducteurs de rang(s) plus élevé(s) que ceux du bus 16, du compteur cyclique 34 vers le multiplexeur 35.

Avantageusement, le circuit de retard de la figure 1 ou de la figure 3 est réalisé sous la forme d'un circuit intégré unique sur une plaquette en matériau semiconducteur.

Un mode de réalisation simplifié non représenté consiste à omettre le registre à décalage programmable 1 dans le dispositif de retard de la figure 1, à appliquer tous les conducteurs du bus 15 au compteur cyclique 12 et à utiliser une mémoire RAM 6 à emplacements de 1 bit. Ceci conduit à un schéma très simple du dispositif de retard selon l'invention mais pour des applications pour lesquelles la fréquence d'horloge 1/H est faible, typiquement inférieure à 10 MHz.

Il est décrit ci-dessus une mémoire RAM statique qui est la plus appropriée pour la mise en oeuvre de l'invention ; il est cependant aussi possible d'utiliser une mémoire RAM dynamique pourvu que les cycles de rafraîchissement, au moins pour les n emplacements exploités parmi les r emplacements que contient la mémoire, soient respectés, pendant chaque durée npH afin de ne pas perdre l'information contenue dans ces n emplacements. D'autre part, sur les figures 1 et 3, la mémoire RAM 6 est représentée avec un bus de données d'entrée et un bus de données de sortie distincts ; un bus de données d'entrée-sortie commun peut être utilisé de façon connue moyennant des commandes appropriées pour cet autre type de configuration de la mémoire. Le signal de commande d'écriture-lecture de la RAM 6 peut aussi être porté par un conducteur unique en provenance du séquenceur 13 ; dans ce dernier cas un autre conducteur de validation d'écriture ou de lecture reliant les éléments 13 et 6 est alors nécessaire.

## Revendications

1. Dispositif de retard pour retarder un signal numérique d'entrée série SIN d'un nombre entier M de temps de bit H, soit d'une durée : $\tau$ = M.H, et le transformer en un signal numérique de sortie série retardé SOUT ayant même débit binaire que SIN, le nombre M étant programmable par pas, comportant une mémoire à accès aléatoire (6),

   caractérisé en ce qu'il comporte un registre d'entrée à au moins un bit (4) et du type entrée série/sorties parallèles connecté à ladite mémoire à accès aléatoire (RAM 6) dont chacun des r emplacements de bit ou bits contient un nombre entier p de bit ou bits au moins égal à 1, un registre de sortie (8) à au moins un bit et du type entrées parallèles/sortie série connecté à ladite mémoire à accès aléatoire (6) constitués par un décodeur (11, 29) qui reçoit sous forme numérique sur un bus d'entrée (14) le nombre M, un compteur cyclique (12, 36) qui reçoit du bus de sortie (17) du décodeur (11, 29) un nombre de programmation N par lequel il adresse cycliquement la mémoire à accès aléatoire (6) et un séquenceur (13) qui reçoit du compteur cyclique (34) un signal de commande de cycle d'écriture-lecture et qui fournit à la mémoire à accès aléatoire (6) les signaux de commande d'écriture et de lecture, et en ce que ledit décodeur (11, 29) est un soustracteur qui effectue l'opération : M - q = N, q incorporant le retard interne exprimé en un nombre entier de périodes H intrinsèquement apporté par lesdits registres d'entrée (4) et de sortie (8) et la mémoire à accès aléatoire (6) lors de leur fonctionnement.

**2.** Dispositif de retard selon la revendication 1, caractérisé en ce que la mémoire à accès aléatoire (6) est organisée en mots de p bits, p étant égal à 2 ou à un multiple de 2, que ledit registre d'entrée (4) comporte une entrée série et p sorties parallèles, ledit registre de sortie (8) comporte p entrées parallèles et une sortie série, et qu'il comporte en outre, juste en amont dudit registre d'entrée (4), un registre à décalage programmable (1, 25) qui reçoit du bus de sortie (15) du décodeur (11, 29) les bits les moins significatifs dudit nombre de programmation N fournissant un nombre de bits de décalage 1 tel que :
np + l - 1 = N et que ledit décodeur est conçu pour fournir une partie principale n du nombre de programmation N audit compteur cyclique (12, 34).

**3.** Dispositif de retard selon la revendication 2, caractérisé en ce que ledit registre à décalage programmable (1) est constitué par le montage en série d'un registre à décalage (2) à p bits à entrée série et p sorties parallèles et d'un multiplexeur (3) à entrée série, une parmi p, et sortie série.

**4.** Dispositif de retard selon la revendication 2 ou 3, caractérisé en ce que ledit registre à décalage programmable (25) par pas de 1 bit est conçu pour que sa longueur soit au moins égale à : p + q - 1, que ledit décodeur (29) comporte des moyens de détection (31) pour détecter si le nombre M est supérieur ou égal, ou inférieur à : p + q, et des moyens de commande (33, 26) pour, si M est inférieur à p + q, commuter simultanément les bits d'entrée les moins significatifs du décodeur (29) sur un dispositif de décodage simplifié interne au décodeur et la sortie de données série du registre à décalage programmable sur la sortie dudit dispositif de retard.

**5.** Dispositif de retard selon l'une des revendications 1 à 4, caractérisé en ce qu'il est réalisé sous la forme d'un seul circuit intégré.

**6.** Application du dispositif de retard selon l'une des revendications 1 à 5 à un dispositif de code correcteur d'erreur pour réaliser des retards supérieurs à 500 temps de bit avec un débit binaire de l'ordre de 40 MHz.

**7.** Application du dispositif de retard selon l'une des revendications 1 à 5 au retard de ligne(s) d'image codée(s) sous forme numérique.

**Patentansprüche**

**1.** Verzögerungsanordnung zur Verzögerung eines seriellen digitalen Eingangssignals SIN um eine ganze Zahl M von Bitdauern H, also um eine Zeitdauer τ = M·H, und um es in ein verzögertes serielles digitales Ausgangssignal SOUT mit der gleichen Übertragungsrate wie SIN umzusetzen, wobei die Anzahl M schrittweise programmierbar ist, welche Anordnung einen Speicher mit wahlfreiem Zugriff (6) umfaßt, <u>dadurch gekennzeichnet</u>, daß sie ein Eingangsregister mit mindestens einem Bit (4) vom Seriell-Ein-Parallel-Aus-Typ umfaßt, das mit dem genannten Speicher mit wahlfreiem Zugriff (RAM 6) verbunden ist und von dem jede der r Bitplätze eine ganze Zahl p von Bits, die mindestens gleich 1 ist, enthält, ein Ausgangsregister (8) mit mindestens einem Bit vom Seriell-Ein-Parallel-Aus-Typ, das mit dem genannten Speicher mit wahlfreiem Zugriff verbunden ist, sowie Mittel zur Steuerung des Speichers mit wahlfreiem Zugriff (6), die von einem Decodierer (11, 29) gebildet werden, der an einem Eingangsbus (14) die Zahl M in digitaler Form empfängt, einem zyklischen Zähler (12, 36), der vom Ausgangsbus (17) des Decodierers (11, 29) eine Programmierzahl N empfängt, mittels der er den Speicher mit wahlfreiem Zugriff(6) zyklisch adressiert, und einer Ablaufsteuerungsschaltung (13), die von dem zyklischen Zähler (34) ein Signal zur Steuerung des Schreib-Lese-Zyklus empfängt und dem Speicher mit wahlfreiem Zugriff (6) die Schreib-Lese-Steuerungssignale liefert, und daß der genannte Decodierer (11, 29) ein Subtrahierer ist, der folgende Operation ausführt: M - q = N, wobei q die interne Verzögerung ist, ausgedrückt als ganze Zahl von Perioden H, die das Eingangsregister (4), das Ausgangsregister (8) und der Speicher mit wahlfreiem Zugriff während des Betriebs mit sich mitbringen.

**2.** Verzögerungsanordnung nach Anspruch 1, <u>dadurch gekennzeichnet</u>, daß der Speicher mit wahlfreiem Zugriff (6) in Wörtern von p Bits organisiert ist, wobei p gleich 2 oder einem Vielfachen von 2 ist, daß das genannte Eingangsregister (4) einen seriellen Eingang und p parallele Ausgänge hat, das genannte Ausgangsregister (8) p parallele Eingänge und einen seriellen Ausgang hat und daß er außerdem gerade oberhalb des Eingangsregisters (4) ein programmierbares Schieberegister (1, 25) umfaßt, das vom Ausgangsbus (15) des Decodierers (11, 15) die niedrigstwertigen Bits der Programmierzahl N empfängt, wobei eine Anzahl Bits mit der Verschiebung 1 geliefert werden, so daß: np + l - 1 = N, und daß der genannte Decodierer zum Liefern eines wesentlichen Teils n der Programmierzahl N an den zyklischen Zähler (12, 34) eingerichtet ist.

3. Verzögerungsanordnung nach Anspruch 2, dadurch gekennzeichnet, daß das programmierbare Schieberegister (1) durch eine Reihenschaltung aus einem p-Bit-Schieberegister (2) mit seriellen Eingang und p parallelen Ausgängen und einem Multiplexer (3) mit seriellem Eingang, jeweils einem aus p, und seriellem Ausgang gebildet wird.

4. Verzögerungsanordnung nach Anspruch 2 oder 3, dadurch gekennzeichnet, daß das genannte, mit Schritten von 1 Bit programmierbare Schieberegister (25) so eingerichtet ist, daß seine Länge mindestens gleich: p + q - 1 ist, daß der genannte Decodierer (29) Detektionsmittel (31) umfaßt, um zu detektieren, ob die Zahl M größer oder gleich oder aber kleiner p + q ist, sowie Steuerungsmittel (33, 26), um für den Fall, daß M kleiner als p + q ist, gleichzeitig die niedrigstwertigen Eingangsbits des Decodierers (29) auf eine vereinfachte Decodieranordnung innerhalb des Decodierers zu schalten und den seriellen Datenausgang des programmierbaren Schieberegisters auf den Ausgang der Verzögerungsanordnung.

5. Verzögerungsanordnung nach einem der Ansprüche 1 bis 4, dadurch gekennzeichnet, daß sie in Form einer einzigen integrierten Schaltung verwirklicht wird.

6. Anwendung der Verzögerungsanordnung nach einem der Ansprüche 1 bis 5 auf eine Fehlerkorrektur-Codeeinrichtung, um Verzögerungen zu realisieren, die größer als 500 Bitdauern sind, mit einer Übertragungsrate von ungefähr 40 MHz.

7. Anwendung der Verzögerungsanordnung nach einem der Ansprüche 1 bis 5 auf die Verzögerung von (einer) digital codierten Bildzeile(n).

## Claims

1. A delay device for delaying a digital serial input signal SIN by an integer number of M bit periods H, so by a time $\tau$ = M.H, and for transforming it into a delayed digital serial output signal SOUT having the same bit rate as SIN, the number M being programmable in steps, which device comprises a random access memory (6), characterized in that it comprises an at least one-bit input register (4) of the serial-input/parallel-output type which is connected to said random access memory (RAM 6), each of the r bit location of which contains an integer number of p bits which is at least equal to 1, an at least one-bit output register (8) of the parallel-input/serial-output type which is connected to said RAM, and means for controlling the RAM (6) which are formed by a decoder (11, 29) which receives the number M in digital form on an input bus (14), a cyclic counter (12, 36) which receives, from the output bus (17) of the decoder (11, 29), a programming number N whereby it cyclically addresses the RAM (6), and a sequencer (13) which receives a write/read cycle control signal from the cyclic counter (34) and which supplies the RAM (6) with the write and read control signals, and in that said decoder (11, 29) is a subtraction device which executes the operation M-q = N, where q incorporates the internal delay, expressed as an integer number of periods H, intrinsically imposed by said input (4) and output registers (8) and the RAM (6) during operation.

2. A delay device as claimed in Claim 1, characterized in that the RAM (6) is organized in p-bit words, p being equal to 2 or a multiple of 2, said input register (4) comprising a serial input and p parallel outputs, said output register (8) comprising p parallel inputs and one serial output, and in that it also comprises, just upstream from said input register (4), a programmable shift register (1, 25) which receives the least-significant bits of the programming number N from the output bus (15) of the decoder (11, 29) and which supplies a number of shift bits 1 so that np+1-1 = N, said decoder being constructed to apply a principal part n of the programming number N to said cyclic counter (12, 34).

3. A delay device as claimed in Claim 2, characterized in that said programmable shift register is formed by the series connection of a p-bit shift register (2) having a serial input and p parallel outputs, and a multiplexer (3) having a serial input, l-out-of-p, and a serial output.

4. A delay device as claimed in Claim 2 or 3, characterized in that said shift register (25) which is programmable in steps of 1 bit is constructed so that its length is at least equal to p+q-1, said decoder (29) comprising detection means (31) for detecting whether the number M is greater than or equal to or smaller than p+q, and control means (33, 26) for switching, if M is smaller than p+q, the least significant input bits of the decoder (29) simultaneously to a simplified internal decoding device of the decoder, and the serial data output of the programmable shift register to the output of said delay device.

5. A delay device as claimed in any one of the Claims 1 to 4, characterized in that it is realised as a single integrated circuit.

6. The use of the delay device as claimed in any one of the Claims 1 to 5 for an error correction code device in order to realize delays greater than 500 bit periods with a bit rate of the order of 40 MHz.

7. The use of the delay device as claimed in any one of the Claims 1 to 5 for the delay of an image line or lines encoded in digital form.

FIG.1

EP 0 400 734 B1

FIG.2

H
SIN
IMR
DIN
AD
R
W
DOUT
SOUT

10

FIG.3

EP 0 400 734 B1